# EUROPEAN PATENT SPECIFICATION

(11) **EP 1 427 348 B1**
(45) Date of publication and mention of the grant of the patent: **13.06.2012**
(21) Application number: 02797715.6
(22) Date of filing: 05.09.2002
(51) Int. Cl.: A61C 8/00

(54) **IMPLANT, AND TIGHTENING MEMBER AND SPACER MEMBER FOR SUCH AN IMPLANT**
IMPLANTAT UND BEFESTIGUNGSGLIED UND ABSTANDSGLIED FÜR EIN SOLCHES IMPLANTAT
IMPLANT ET ELEMENT DE SERRAGE ET ECARTEUR DESTINES A CET IMPLANT

(30) Priority: 06.09.2001 SE 0102948
(43) Date of publication of application: 16.06.2004
(73) Proprietor: Nobel Biocare Services AG, 8058 Zürich-Flughafen (CH)
(72) Inventor: ARINGSKOG, Per, S-430 20 Veddige (SE); JOHANSSON, Anders, S-416 60 Göteborg (SE); JÖRNEUS, Lars, S-430 30 Frillesås (SE)
(74) Representative: Davies, Dominic Jack
(86) International application number: PCT/SE2002/001585
(87) International publication number: WO 2003/020154

(56) References cited:
- WO-A1-00/27300
- WO-A1-02/080804

## Description

The present invention relates to an implant (fixture) which can cooperate with a tightening member and spacer member. The implant is arranged with an internal recess which extends from the upper parts of the implant and opens upward or outward, where the recess is arranged with first tracks (grooves) and/or ridges (raised parts, teeth, etc.) which, seen in the cross section of the recess, extend outward from the main periphery of the recess toward the outer wall of the implant. First surfaces of said first tracks or ridges can cooperate with corresponding and opposite second surfaces of second ridges and/or tracks arranged on the tightening member (the installation member or the installation tool). The invention also relates to a tightening member (installation tool) and a spacer member for said implant which at its upper or outer end has a recess which extends downward in the implant and at whose wall there are arranged, extending between the inside of the recess and the outside (wall) of the implant, first tracks and/or ridges (raised parts, teeth, etc.) provided with first surfaces coinciding with the radius of the recess or one or more lines extending parallel to the radius (plane in the longitudinal direction of the implant).

From US patent specification 4 960 381 it is already known to arrange a recess with a hexagonal cross section in the implant, where the corners of the hexagon have been beveled to facilitate entry of the tightening member, for example in the form of a hexagon key.

From SE 9803849-0 (513 111) by the same Applicant as the present application, it is already known to arrange recesses with what is called a "stargrip" function in implants or fixtures, in which a number of tracks are arranged extending in radial directions from the periphery in a recess of circular cross section. The tightening tool is in this case provided with ridges corresponding to said tracks, and a rotational cooperation between the tool and the implant is obtained via said tracks and ridges or equivalent. In addition, there is a cone-shaped arrangement on the tool which means that the tool can come into cooperation with the implant in a wedge function designed to allow the implant to be driven or carried by means of the tool.

With the Mark-III system generally available on the market from the Applicant (Nobel Biocare AB/SE), it is already known per se, in connection with recesses of the type in question, to use tracks which in the cross section of the recess have the shape of a rectangle or square and where one side surface of the track is arranged coinciding with a line parallel to a radius which, in the cross section of the recess, intersects the center point of the track.

In this kind of arrangement, there is a requirement to obtain a well-coordinated solution in respect of the cooperation function not only between the implant and the tightening tool, but also between the implant and the spacer member. It should be noted here that the production principles hitherto used for testing and producing tooth replacements, for example, can result in considerable clearance in the direction of rotation of the spacer member in relation to the implant, and there is therefore a need to limit such rotational clearance. The cooperation function between the implant and the spacer member, on which the tooth replacement in question is applied, and minimal rotational clearance between the spacer member and the implant are not discussed in the abovementioned references. The object of the present invention is to solve the problem with an optimum cooperation function between, on the one hand, the implant and the tightening member and, on the other hand, between the implant and the spacer member.

There is also a requirement that said stargrip function can be fully used and that the force of rotation on the spacer member in the implant can be kept relatively high despite small structural dimensions in height and/or in diameter in cases where this is required. In addition, it must be possible to use a circular outer shape of the implant/fixture and at the same time use the carrying capacity or wedge function for the securing member or installation tool. Thus, in a preferred embodiment, there is a need to achieve installation with instruments (installation tools) with a carrying and lifting capacity. It must be possible for the installation tool to be mounted in a relatively simple manner, which can be done by means of the socket lying under a conical countersink. According to the invention, the radially directed surfaces must be able to minimize the pressure which is required to transmit relatively high torsional moments, for example torsional moments of ca. 100 Ncm which can occur in the installation in question. Transmission surfaces which are more tangentially directed (cf. said Swedish patent specification) give a wedging action which results in a higher surface pressure. The invention also aims to solve these problems.

There is a requirement to obtain a low position of the flange for the spacer member's locking screw in order to achieve excellent flexibility (angled positioning) of the prosthetic construction in question. Thus, for example, there may be a requirement for a positional height of the flange which substantially corresponds to the positional height of the implant on the dentine margin. The invention solves this problem too.

There is also a requirement for a spacer attachment on a conical surface which permits easy fitting of the spacer. The conical attachment additionally reduces the risk of hard tissue or soft tissue in connection with the implant or fixture installation. According to the invention, it must also be possible to use a conical attachment which gives an increased pressure between fixture and spacer, which reduces the risk of leakage. There is also a requirement for the stargrip socket to be designed with surfaces which, for a given clearance, minimize the rotational clearance between fixture and spacer. This must also be possible in connection with low spacer heights. The angle of the cone in question must be able to be adapted so that it is possible to attach a bridge (tooth replacement) with normally diverging fixtures without spacers being used while at the same time maintaining a secure attachment. The invention aims to solve these problems too.

The invention is defined by independent claim 1. In an implant first and second surfaces are arranged to extend substantially parallel in the radial directions under a rotational action exerted on the implant by means of the tightening member. Further, the first tracks and/or ridges (raised parts, teeth, etc.) are arranged to cooperate with third ridges (raised parts, teeth, etc.) and/or tracks on the spacer member upon mutual rotational movements of the implant and of the spacer member, and that the first tracks or ridges are arranged to give the spacer member substantial freedom from clearance or a substantially defined position of rotation in relation to the implant in the mutual directions of rotation of the implant and of the spacer member.

In a first embodiment, the recess opens out in the upper parts of the implant via a first surface which is shaped as a truncated cone and which forms a first recess part of the recess. Said first recess part merges into a second recess part via the smaller base of said first surface. The second recess part can be arranged with a portion free of tracks or ridges in its inner parts for forming an undercut space which can be used for a snap-fit member, e.g. on impression studs. The recess also comprises a third recess part with an internal thread into which a screw for securing the spacer member on the implant can be screwed.

Further characteristics of the implant are set out in the attached dependent claims under claim 1.

The tightening member is arranged with second ridges (raised parts, teeth, etc.) and/or tracks which have second surfaces which, upon a rotational movement of the tightening member relative to the implant, can be set substantially parallel to the first surfaces of the implant, and that, upon said rotational action, one of the second ridges (raised parts, teeth, etc.) and/or tracks causes rotational force(s) substantially at right angles to the first surfaces.

The spacer member is arranged with third ridges (raised parts, teeth, etc.) and/or tracks which have surfaces which can be set substantially opposite the first surfaces of the implant. Further characteristics are that the first and third tracks and ridges and the first and third surfaces are arranged with a substantial pass fit accuracy which prevents any substantial rotational clearance between the spacer member and the implant.

Further developments of the spacer member are set out in the attached dependent claims for the spacer member.

By means of what has been stated above, a countersunk connection geometry can also be used upon installation or screwing-in of the screw-type implant. The new interface between implant and installation tool is based on the stargrip function being used and on the stargrip socket also being used for spacer attachment. The arrangement can be provided with or without countersinking in the implant. In a preferred embodiment, ridges or teeth are used on the tool and the spacer, which ridges or teeth cooperate with tracks in the recess of the implant. In principle, the positions of the tracks, teeth or ridges can be changed around so that ridges or teeth in the implant cooperate with tracks in the installation tool and the spacer. In one embodiment, the track and ridge arrangement can be combined so that the implant has on the one hand tracks and on the other hand ridges and the tool and the spacer member have corresponding ridges or tracks. According to the invention, the cooperating surfaces between the tool and the implant will be substantially parallel, while other surfaces in the track or ridge arrangement can have different configurations and angles. Thus, each track can have the shape of a triangle, although quadrangles in the form of squares and rectangles are preferred. As a result of what has been proposed above, the rotational clearance can be reduced between spacer member and implant, high torsional moments can be transmitted with the installation tool to the implant, and small installation dimensions can be used for the spacer member.

A presently proposed embodiment of implant, installation tool and spacer member having the characteristics significant to the invention will be described below with reference to the attached drawings, in which:
- Figure 1: shows an end view, in partial cross section, of the implant from its upper or outer end, and with a tooth arrangement on an installation tool being partly shown,
- Figure 2: shows, in an end view from the upper or outer end of the implant, a track arrangement in the implant, and at the same time ridges or teeth on a spacer member partially shown in cross section,
- Figure 3: shows, in an end view and partial cross section, parts of the implant according to Figures 1 and 2 and a partially shown tooth arrangement on installation tool and spacer member,
- Figure 4: shows a first embodiment of an implant in longitudinal section,
- Figure 5: shows the implant from Figure 4 in a perspective view,
- Figure 6: shows, in longitudinal section, parts of the implant in a second embodiment,
- Figure 7: shows, in longitudinal section, the implant in a third embodiment which can cooperate with a partially shown spacer member,
- Figure 8: shows, in longitudinal section, parts of the implant and an installation tool with stargrip function,
- Figure 9: shows a perspective view of the implant and tool from Figure 8,
- Figure 10: shows, in longitudinal section, the implant and a spacer member applied thereon,
- Figure 11: shows a perspective view of the spacer member according to Figure 10, and
- Figure 12: shows a perspective view of a second embodiment of the spacer member.

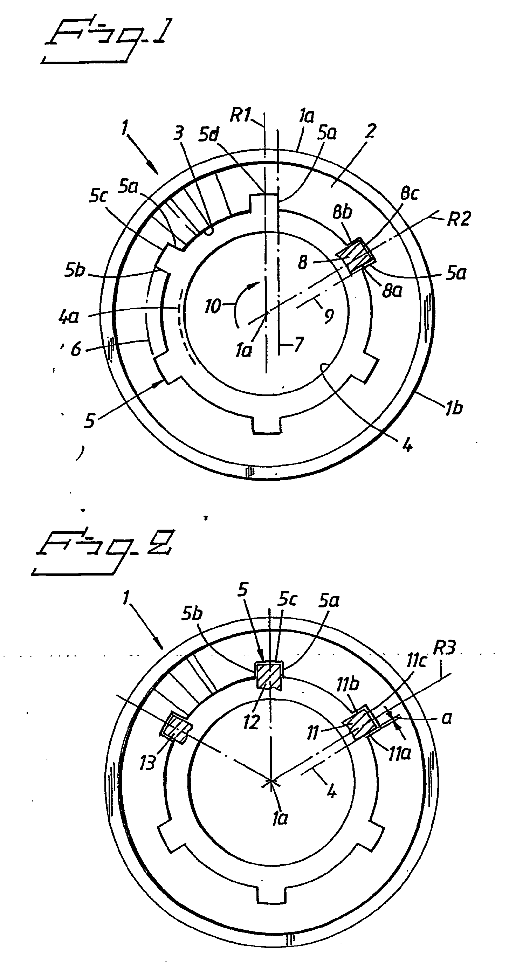

In Figure 1, an implant fixture is indicated by 1. The implant can be an implant known per se, for example an implant from what is called the Brånemark system. The implant is not shown in detail, but only in the respect relevant to the invention. The present implant is provided with a cylindrical wall 1a and an internal recess 2 which has the shape of a truncated cone and whose broader part (base) forms the mouth in or at the upper parts of the implant and whose lower part (base) merges into a circular recess 3. Said circular recess merges in turn into a second circular recess 4 with an internal thread 4a which has been partially shown. The circular recess 3 is provided with a number of tracks which in the present case are 6 in number. The number of tracks can be chosen within the range of 4-10, said number of tracks preferably being 6-10. The tracks in the present case are of identical configuration and each track has a first surface 5a which constitutes a front surface in the drive function. The track additionally comprises a rear surface 5b which is used in the drive function when the implant is to be acted upon in order to unscrew it. Each track additionally comprises a base surface 5c which preferably follows an inscribed circle 6 which extends through all the base surfaces in the different tracks, but which has been shown only in part in the figure. The tracks can have the shape of quadrangles (with rounded corners) in the form of rectangles (see the figure) or squares. The extent of the first surface 5a or (main) part of the first surface is important in this case. In Figure 1, a radius R1 is indicated which extends through central parts 5d of the tracks in question. The first surface 5a will then coincide with a line 7 or a plane which extends at right angles to the plane of the figure in Figure 1. According to the invention, the line or plane in question will be substantially parallel to the radius R1. Figure 1 also shows a second radius R2 which extends through one of the tracks discussed above. A ridge or tooth on a used tightening member or installation tool is indicated by 8. A characteristic of the ridge or tooth in question is that it has a second surface 8a through which there extends a line 9 or a plane at right angles to the plane of the figure in Figure 1. A characteristic of the extent of the line 9 or plane is that it is substantially parallel to the radius R2. The surface 8a is used when the tool is driven in the clockwise direction 10. The ridge or tooth 8 is also provided with a rear surface 8b which cooperates with the rear edge (cf. 5b) of the track if the implant is to be unscrewed. The tool is also provided with an outer surface 8c which has a wedging function (described in more detail below) which is used for support of the implant with or by the installation tool. The rear edges 5b of the tracks can be arranged with an inclination so that configurations other than the rectangular shape shown (or square shape) can be obtained, for example a triangular shape.

In Figure 2, the cooperation of the implant with a spacer member has been shown in principle. The spacer member is represented in Figure 2 by means of teeth 11, 12 and 13 which are applied in respective recesses 5. The last-mentioned recesses 5 are also indicated in Figure 2 by the surfaces 5a, 5b and 5c. The ridges or teeth on the spacer member have a shape corresponding to the shape of the respective tracks 5 in the implant. Thus, the ridge of each spacer member is provided with side surfaces 11a and 11b and with an outer boundary surface 11c. A characteristic of each spacer member ridge is that the side surfaces 11a and 11b in question adjoin or are intersected by a line 14 or a plane which extends at right angles to the plane of the figure in Figure 2. A characteristic of the spacer member ridge is that the line 14 in question is substantially parallel to the respective radius R3 which extends through the central parts of the track 5 (see Figure 1). Said parallelism must be present for at least the surface 11a, while the side surface can have a different extent (see the arrangement according to Figure 1). A characteristic of the shapes of the ridges on the spacer member is that a small clearance is present between the side surfaces 5a, 5b and 11a, 11b. In this way, a small rotational clearance between the spacer member and the implant is obtained. In a preferred embodiment, the rotational clearance is of the order of 0.01 mm. Values of around 0.02 mm can also be used, or values lying between said values. The number of ridges in the spacer member can be the same as the number of tracks in the implant or, alternatively, can be less than said number of tracks.

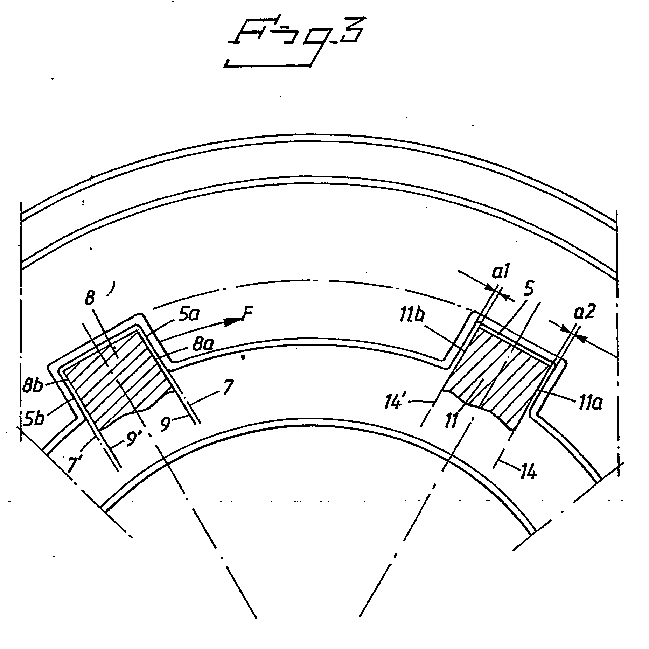

Figure 3 shows, in an enlarged view compared to Figures 1 and 2, a preferred embodiment of the track configuration in the implant and of the ridge configuration on the tool or spacer member. The front surface 8a on the tool ridge 8 engages the first surface 5a substantially parallel, i.e. the lines 7 and 9 for the track and ridge, respectively, are substantially coincident in this function. The tightening force in the clockwise direction (see Figure 1) generates in each track and ridge function a rotational force F which, by virtue of the arrangement shown, can be comparatively high and can, for example, assume values of up to 10 Newton. The unscrewing function is obtained by cooperation between the surfaces 5b and 8b and is of substantially the same order. During unscrewing, the lines 7' and 9' substantially coincide and retain their substantial mutual parallelism. In the case shown, the spacer member 11 is centered in the track 5. The abovementioned distance a is in this case divided into part distances a1 and a2 on each side of the ridge or equivalent. The lines for the front and rear surfaces 11a and 11b in question are indicated by 14, 14' in Figure 3. The number of ridges on the tool can be the same as the number of tracks in the implant or, alternatively, can be less than the last-mentioned number of tracks.

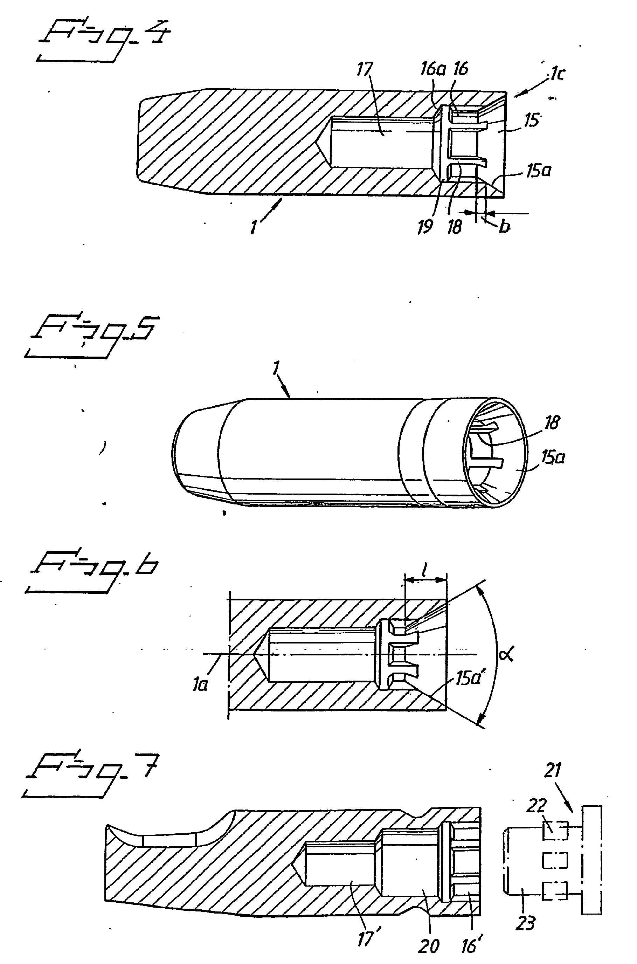

According to Figure 4, the circular recess mentioned above is divided into three partial recesses 15, 16 and 17. The first partial recess is formed by the abovementioned cone-shaped surface 15a. The ridges 18 extend along most of the second partial recess 16. In addition, the ridges extend partially up into the first partial space, which extent b can constitute 1/4 - 1/3 of the length of the first partial recess in the longitudinal direction of the implant. The ridges 18 end at a distance from the extent of the second partial recess 16 so as to form an undercut in the inner parts of the second partial recess 16, which undercut can form a securing member for a snap-fit member (not shown) which is used in the tooth replacement production (e.g. on impression studs) in a manner known per se. The second partial recess merges into the third partial recess 17 which consists of a screw hole for a locking screw (not shown in the figure) for a spacer member (not shown in the figure).

Figure 5 shows a perspective view of the implant from Figure 4 with associated ridges 18 and cone-shaped surface 15a.

Figure 6 shows an alternative embodiment with a longer cone-shaped surface 15a. The length 1 and the cone angle α can be chosen as a function of the installation situation. In the present case according to Figures 4 and 6, the length 1 has a value which is about 10-20% of the total length of the implant. The angle a is chosen within the range of 30°-90° and in the particular case shown is ca. 60°.

According to the embodiment in Figure 7, which do not fall within the claimed subject-matter, the circular recess can be designed with another arrangement of partial recesses. Thus, it includes a recess 16' (fourth recess) in which the tracks extend along most of the length of the partial recess. In this case, use is made of a fifth partial recess 20 and a sixth partial recess 17', the last-mentioned having a shape and function corresponding to those of the partial recess 17 in Figure 4. In this case, therefore, the surface shaped as a truncated cone (see 15a, 15b) is absent. In Figure 2, a spacer member 21 with ridges or teeth 22 is symbolically indicated which can cooperate with tracks in the first partial recess. The second partial recess 20 in this case functions as a guide for a part 23 bearing the ridges or teeth 22.

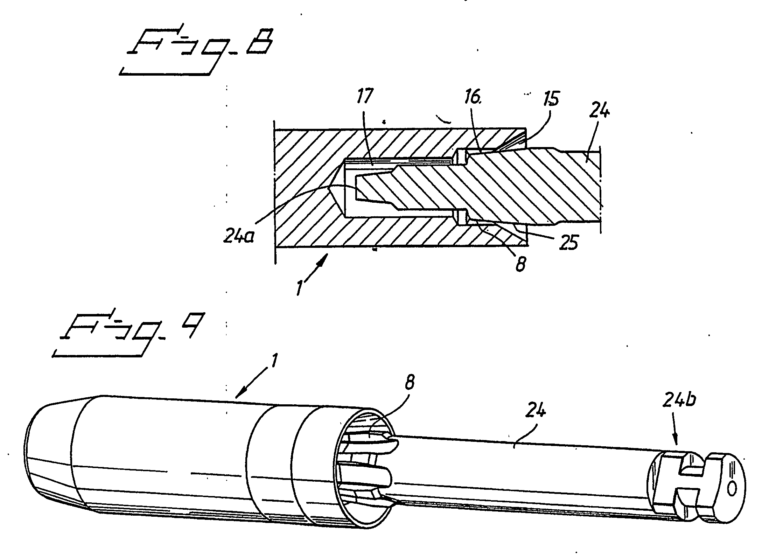

Figure 8 shows the cooperation between the implant 1 and an installation tool 24 which can be of a type known per se. Reference is made in this connection to, inter alia, the Swedish patent specification mentioned in the introduction. The difference from the previously known construction is attributable to the above-described arrangement of tracks, ridges or teeth. The tool 24 comprises a cone-shaped part 25 which effects the abovementioned wedging function for supporting the implant with the tool. The tool is driven with its front parts 24a through the first partial recess 15 so that its teeth cooperate with the tracks arranged in the second partial recess. The front parts 24a of the tool are in this case arranged so that they permit introduction into the third partial recess 17.

In Figure 9, the tool 24 is shown with a socket arrangement for a drive device (e.g. drill machine) of suitable type (not shown in Figure 9). The application in the implant or fixture 1 otherwise corresponds to what is shown in Figure 8.

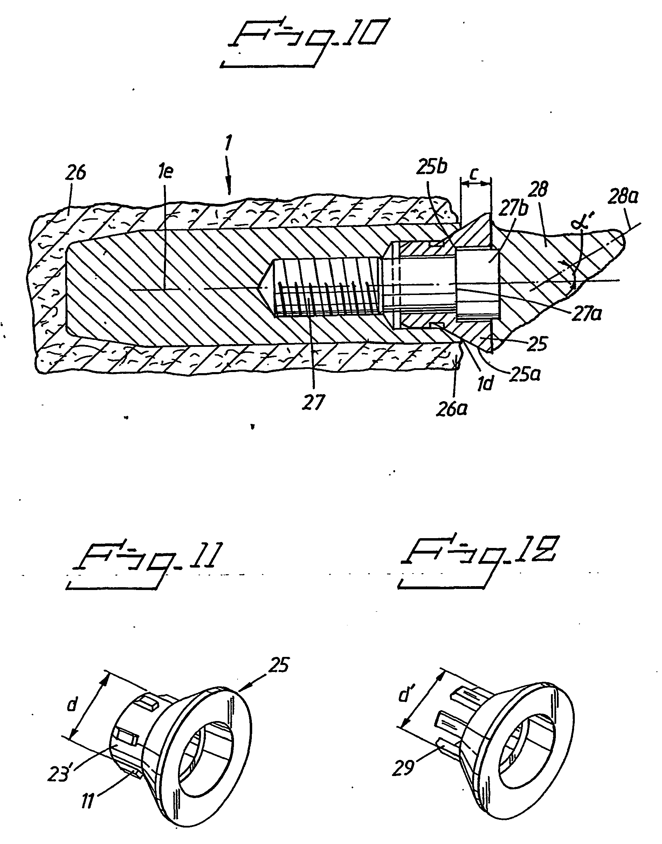

Figure 10 shows the case where a spacer member 25 is applied in an implant or a fixture 1 which has been screwed into a bone 26 (e.g. jaw bone) by means of a tool according to Figures 8 and 9. The spacer member is secured by means of a screw 27 in a manner known per se. The spacer member has a cone-shaped outer surface 25a which is adapted with great precision to the internal cone of the implant, see the illustrative embodiments according to Figures 4 and 6 where the internal cones in question have been indicated by 15a and 15a'. The spacer member is intended, in a manner known per se, to support a tooth replacement, bridge part, etc., which has been indicated in principle by 28. A characteristic of the arrangement according to Figure 10 is a low installation height for the spacer member, which low installation height has been indicated by c. The value of the height c can be between 5 and 10 mm. The illustrated arrangement with a cone-shaped outer surface 25a extending partially above the implant 1 effects or permits a very good incorporation function in the dentine, cf. above description of problems. The arrangement also means that a support flange 25b of the spacer member 25 acquires a low or drawn-in position for a bearing surface 27a on the head 27b of the tightening screw. Said drawn-in position lies substantially at the same height as the outer surface 1d (or free surface) of the implant 1 which is placed at the outer surface 26a of the dentine 26. The prosthetic construction 28 can in this way be positioned at a considerable angle in relation to the implant, cf. the angle α' between the longitudinal axis 1e of the implant and the main longitudinal axis 28a of the construction. The considerable angled position can be effected without the head of the tightening screw forming an obstacle or disturbing the outer angling of the construction 28.

Figure 11 shows a perspective view of the spacer member in question which is used in the illustrative embodiment according to Figure 10. In the present case, the ridges, teeth, etc. 11 are arranged on a cylindrical part 23' (see the illustrative embodiment according to Figure 7). The arrangement permits small installation dimensions with respect to the diameter d of the cylindrical part, which diameter can be chosen within the range of 8-12 mm.

If an even smaller diameter is wanted, the arrangement according to Figure 12 can be used. In this case, the ridges or teeth are arranged on or form protruding elements 29 which are arranged alongside one another in a ring-shaped configuration. In this case, a diameter d' can be further reduced in relation to the case according to Figure 11 with the diameter d.

Said tracks can be considered as extending in the radial direction as seen from the center line 1a (or inside) of the implant, see Figures 1, 2 and 6. The tracks are thus located in the implant wall and extend from this in a direction out toward the outer surface 1b of the implant (see Figure 1). The outer surface of the implant is indicated by 1b in Figure 1, and the upper or outer end of the implant is indicated by 1c in Figure 4. According to Figure 6, the longitudinal direction of the implant is indicated by means of the longitudinal axis 1a. The snap-fit member in question can be arranged on an impression stud. The cone-shaped surface arrangement between the implant and the spacer member allows the inside of the implant to be effectively sealed off from the outer parts of the implant and spacer member, which among other things prevents penetration into the inside of the implant from the external atmosphere. A characteristic of the recess in question, which is made up of said partial recesses, is that it preferably has a cylindrical configuration or cylindrical configurations. The arrangement gives the spacer member a substantially defined position of rotation (freedom from clearance) relative to the implant.

The invention is not limited to the embodiment shown above by way of example, and instead it can be modified within the scope of the attached patent claims and the inventive concept.

## Claims

1. In combination, an implant (1) and an installation tool (24) or a spacer member (25, 26), said implant being arranged with an internal recess which extends from upper parts (1c) of the implant and opens upward, the recess being arranged with first tracks (5) and/or first ridges which, seen in the cross section of the recess, extend outward from the main periphery (3) of the recess, wherein
first surfaces (5a) of said first tracks (5) and/or first ridges can cooperate with corresponding second surfaces (8a) on second ridges (8) and/or second tracks arranged on the installation tool (24), at least some of the first surfaces (5a) are arranged to extend substantially parallel in the radial directions of the recess with at least some of the corresponding second surfaces (8a) during a rotational action (10) on the implant (1) by means of the installation tool, or
the first surfaces (5a) of the first tracks (5a) and/or the first ridges are arranged to cooperate with third ridges (11) and/or third tracks on the spacer member (25,26) upon mutual cooperation of the implant and of the spacer member, **characterized in that**
the first tracks or the ridges are arranged to give the spacer member substantial freedom from clearance or a substantially defined position in relation to the implant in the direction(s) of rotation,
the recess of the implant comprises a first recess part (15) and a second recess part (16), wherein the recess opens out in the upper parts (1c) of the implant via a surface (15a, 15a'), which is shaped as a truncated cone and which forms the first recess part (15), a broader base of the first recess part forms the mouth of the recess, and a narrower base of the first recess part merges into the second recess part (16), which is provided with a substantially cylindrical inner surface, and
said first tracks and/or said first ridges are arranged in the second recess part and extend substantially in the longitudinal direction of the implant.

2. The combination as claimed in patent claim 1, **characterized in that** said first tracks and/or said first ridges are arranged to extend over parts of the first recess part (15).

3. The combination as claimed in patent claim 1 or 2, **characterized in that** said first tracks and/or said first ridges extend at least over parts of the surface shaped as a truncated cone, preferably from the narrower base of the first recess part and by a distance, e. g. 1/4-1/3, upward/outward toward the broader base of the first recess part.

4. The combination as claimed in any of the previous patent claims, **characterized in that** the second recess part (16) is arranged free of tracks or ridges in its inner parts for forming an undercut space (19) below the first tracks and/or the first ridges, which undercut space constitutes a securing member for a snap-fit member, e. g. on impression studs.

5. The combination as claimed in any of the previous patent claims, **characterized in that** the recess is arranged with an inner third recess (17) part which adjoins the second recess part (16) via a second surface or bevel designed as a truncated cone, and **in that** the third recess part is arranged with an internal thread or internal threads for a tightening screw (27) for the spacer member.

6. The combination as claimed in any of the preceding patent claims, **characterized in that** the number of first tracks and/or the number of first ridges is 4-10, the number preferably being 6-8, and/or **in that** the number of first tracks and/or the number of first ridges is equal to or exceeds the number of ridges and the number of tracks in the spacer member and/or the tool.

7. The combination as claimed in any of the preceding patent claims, **characterized in that** the first tracks are arranged to transmit substantially high torsional moment of 100 Ncm.

8. The combination as claimed in any of the preceding patent claims, **characterized in that** the surface shaped as a truncated cone has a cone angle (α) in the range of 20°-60°.

9. The combination as claimed in any of the preceding patent claims, **characterized in that** a respective first track or first ridge is intersected by a given radius (R1) in the recess, as viewed in the cross section of the recess, at its central parts (5d), and **in that** the first surface (5a) of the first track or of the first ridge extends along a line (9, 11) parallel to said radius or a plane parallel to said radius.

10. The combination as claimed in any of the preceding patent claims, **characterized in that** each first, second and third track or ridge in the cross section of the recess has the shape of a triangle or quadrangle.

## Patentansprüche

1. In Kombination, ein Implantat (1) und ein Installationswerkzeug (24) oder ein Abstandselement (25, 26), wobei das Implantat mit einer Innenausnehmung versehen ist, die sich von oberen Teilen (1c) des Implantats erstreckt und sich nach oben öffnet, wobei die Ausnehmung mit ersten Spuren (5) und/oder ersten Rippen versehen ist, die, im Querschnitt der Ausnehmung gesehen, sich von der Hauptperipherie (3) der Ausnehmung nach außen erstrecken, wobei
erste Oberflächen (5a) der ersten Spuren (5) und/oder ersten Rippen mit entsprechenden zweiten Oberflächen (8a) auf zweiten Rippen (8) und/oder zweiten Spuren zusammenwirken können, die in dem Installationswerkzeug (24) angeordnet sind, wobei zumindest einige der ersten Oberflächen (5a) ausgebildet sind, um während einer Drehaktion (10) an dem Implantat (1) mittels des Installationswerkzeugs sich im Wesentlichen parallel in den Radialrichtungen der Ausnehmung mit zumindest einigen der entsprechenden zweiten Oberflächen (8a) zu erstrecken, oder
die ersten Oberflächen (5a) der ersten Spuren (5a) und/oder die ersten Rippen angeordnet sind, um mit dritten Rippen (11) und/oder dritten Spuren des Abstandselementes (25, 26) bei gegenseitiger Zusammenwirkung des Implantats und des Abstandselementes zusammen zu wirken, **dadurch gekennzeichnet, dass** die ersten Spuren oder die Rippen angeordnet sind, um dem Abstandselement im Wesentlichen Freiheit von einer Lücke oder einer im Wesentlichen definierten Position in Bezug auf das Implantat in der Richtung/den Richtungen der Drehung zu geben,
wobei die Ausnehmung des Implantats einen ersten Ausnehmungsteil (15) und einen zweiten Ausnehmungsteil (16) aufweist, wobei sich die Öffnung nach außen in den oberen Teilen (1c) des Implantats über eine Fläche (15a, 15a') öffnet, die als Kegelstumpf geformt ist und die den ersten Ausnehmungsteil (15) bildet, wobei eine breitere Basis des ersten Ausnehmungsteils die Öffnung der Ausnehmung bildet und eine schmalere Basis des ersten Ausnehmungsteils in den zweiten Ausnehmungsteil (16) übergeht, der mit einer im Wesentlichen zylindrischen Innenfläche versehen ist, und
wobei die ersten Spuren und/oder die ersten Rippen in dem zweiten Ausnehmungsteil angeordnet sind und sich im Wesentlichen in der Längsrichtung des Implantats erstrecken.

2. Kombination nach Anspruch 1, **dadurch gekennzeichnet, dass** die ersten Spuren und/oder die ersten Rippen angeordnet sind, um sich über Teile des ersten Ausnehmungsteils (15) zu erstrecken.

3. Kombination nach Anspruch 1 oder 2, **dadurch gekennzeichnet, dass** die ersten Spuren und/oder die ersten Rippen sich zumindest über Teile der Fläche erstrecken, die als Kegelstumpf ausgebildet ist, vorzugsweise von der schmaleren Basis des ersten Ausnehmungsteils und um einen Abstand, d. h. 1/4 - 1/3 nach oben/auswärts in Richtung auf die breitere Seite des ersten Ausnehmungsteils erstrecken.

4. Kombination nach einem der vorstehenden Ansprüche, **dadurch gekennzeichnet, dass** der zweite Ausnehmungsteil (16) frei von Spuren oder Rippen in seinen inneren Teilen zur Bildung eines Hinterschnittraums (19) unterhalb der ersten Spuren und/oder der ersten Rippen ausgebildet ist, wobei der Hinterschnittraum ein Sicherungselement für ein Schnapppassungselement, zum Beispiel auf einem Druckbolzen, bildet.

5. Kombination nach einem der vorstehenden Ansprüche, **dadurch gekennzeichnet, dass** die Ausnehmung mit einer inneren dritten Ausnehmung (17) ausgebildet ist, von der ein Teil sich dem zweiten Ausnehmungsteil (16) über eine zweite Fläche oder Abschrägung anschließt, die als Kegelstumpf ausgebildet ist, und dass der dritte Ausnehmungsteil mit einem Innengewinde oder Innengewinden für eine Befestigungsschraube (27) für das Abstandselement versehen ist.

6. Kombination nach einem der vorstehenden Ansprüche, **dadurch gekennzeichnet, dass** die Anzahl der ersten Spuren und/oder die Anzahl der ersten Rippen 4-10 beträgt, wobei die Anzahl vorzugsweise 6-8 ist und/oder dass die Anzahl der ersten Spuren und/oder die Anzahl der ersten Rippen gleich ist oder die Anzahl der Rippen und die Anzahl der Spuren in dem Abstandselement und/oder dem Werkzeug überschreitet.

7. Kombination nach einem der vorstehenden Ansprüche, **dadurch gekennzeichnet, dass** die ersten Spuren angeordnet sind, um ein hohes Torsionsmoment von 100 Ncm zu übertragen.

8. Kombination nach einem der vorstehenden Ansprüche, **dadurch gekennzeichnet, dass** die als Kegelstumpf ausgebildete Oberfläche einen Kegelwinkel (α) im Bereich von 20°-60° aufweist.

9. Kombination nach einem der vorstehenden Ansprüche, **dadurch gekennzeichnet, dass** eine jeweilige erste Spur oder eine erste Rippe durch einen gegebenen Radius (R1), gesehen im Querschnitt der Ausnehmung, in der Ausnehmung in ihrem Mittenteil (5d) geschnitten wird, und dass die erste Oberfläche (5a) der ersten Spur oder der ersten Rippe sich entlang einer Linie (9, 11) parallel zu dem Radius oder einer Planparallelen zu dem Radius erstreckt.

10. Kombination nach einem der vorstehenden Ansprüche, **dadurch gekennzeichnet, dass** jede erste, zweite und dritte Spur oder Rippe im Querschnitt der Ausnehmung die Form eines Dreicks oder eines Quadrates aufweist.

## Revendications

1. Combinaison d'un implant (1) et d'un outil de montage (24) ou d'un élément d'écartement (25, 26), ledit implant étant agencé avec un évidement interne qui s'étend à partir des parties supérieures (1c) de l'implant et s'ouvre vers le haut, l'évidement étant agencé avec des premières pistes (5) et/ou des premières crêtes qui, lorsqu'on les regarde dans la coupe transversale de l'évidement, s'étendent vers l'extérieur à partir de la périphérie principale (3) de l'évidement, où
des premières surfaces (5a) desdites premières pistes (5) et/ou desdites premières crêtes peuvent coopérer avec des deuxièmes surfaces correspondantes (8a) sur des deuxièmes crêtes (8) et/ou des deuxièmes pistes agencées sur l'outil de montage (24), au moins certaines premières surfaces (5a) sont agencées pour s'étendre sensiblement parallèlement dans les directions radiales de l'évidement avec au moins certaines deuxièmes surfaces correspondantes (8a) durant une action de rotation (10) sur l'implant (1) au moyen de l'outil de montage, ou
les premières surfaces (5a) des premières pistes (5a) et/ou des premières crêtes sont agencées pour coopérer avec des troisièmes crêtes (11) et/ou des troisièmes pistes sur l'élément d'écartement (25, 26) lors d'une coopération mutuelle de l'implant et de l'élément d'écartement, **caractérisée en ce que**
les premières pistes ou les crêtes sont agencées pour limiter sensiblement le jeu de l'élément d'écartement ou pour lui donner une position sensiblement définie par rapport à l'implant dans la ou les directions de rotation,
l'évidement de l'implant comprend une première partie (15) d'évidement et une deuxième partie (16) d'évidement, où l'évidement débouche dans les parties supérieures (1c) de l'implant via une surface (15a, 15a'), qui a la forme d'un cône tronqué et qui forme la première partie (15) d'évidement, une base large de la première partie d'évidement forme l'embouchure de l'évidement, et une base étroite de la première partie d'évidement se raccorde à la deuxième partie (16) d'évidement, qui est dotée d'une surface interne sensiblement cylindrique, et
lesdites premières pistes et/ou lesdites premières crêtes sont agencées dans la deuxième partie d'évidement et s'étendent sensiblement dans la direction longitudinale de l'implant.

2. Combinaison telle que revendiquée dans la revendication 1 du brevet,
**caractérisée en ce que** lesdites premières pistes et/ou lesdites premières crêtes sont agencées pour s'étendre sur des parties de la première partie (15) d'évidement.

3. Combinaison telle que revendiquée dans la revendication 1 ou 2 du brevet,
**caractérisée en ce que** lesdites premières pistes et/ou lesdites premières crêtes s'étendent au moins sur des parties de la surface en forme de cône tronqué, de préférence à partir de la base étroite de la première partie d'évidement et par une distance, par exemple 1/4-1/3, vers le haut/vers l'extérieur vers la base large de la première partie d'évidement.

4. Combinaison telle que revendiquée dans l'une des revendications de brevet précédentes, **caractérisée en ce que** la deuxième partie (16) d'évidement est agencée sans pistes ou crêtes dans ses parties intérieures pour former un espace de dégagement (19) en dessous des premières pistes et/ou des premières crêtes, dont l'espace de dégagement constitue un élément de fixation pour un élément d'encliquetage, par exemple sur les goujons d'impression.

5. Combinaison telle que revendiquée dans l'une des revendications de brevet précédentes, **caractérisée en ce que** l'évidement est agencé avec une troisième partie (17) d'évidement interne qui est contiguë à la deuxième partie (16) d'évidement via une deuxième surface ou un chanfrein conçu sous forme de cône tronqué, et **en ce que** la troisième partie d'évidement est agencée avec un filet interne ou des filets internes pour une vis de serrage (27) pour l'élément d'écartement.

6. Combinaison telle que revendiquée dans l'une des revendications de brevet précédentes, **caractérisée en ce que** le nombre de premières pistes et/ou le nombre de premières crêtes est 4-10, le nombre étant de préférence 6-8, et/ou **en ce que** le nombre de premières pistes et/ou le nombre de premières crêtes est supérieur ou égal au nombre de crêtes et au nombre de pistes dans l'élément d'écartement et/ou dans l'outil.

7. Combinaison telle que revendiquée dans l'une des revendications de brevet précédentes, **caractérisée en ce que** les premières pistes sont agencées pour transmettre un couple de torsion sensiblement élevé de 100 Ncm.

8. Combinaison telle que revendiquée dans l'une des revendications de brevet précédentes, **caractérisée en ce que** la surface en forme de cône tronqué possède un angle de cône (α) dans la plage de 20°-60°.

9. Combinaison telle que revendiquée dans l'une des revendications de brevet précédentes, **caractérisée en ce qu'**une première piste respective ou une première crête respective est entrecroisée par un rayon donné (R1) dans l'évidement, telle que vue dans la coupe transversale de l'évidement, au niveau de ses parties centrales (5d), et **en ce que** la première surface (5a) de la première piste ou de la première crête s'étend le long d'une ligne (9, 11) parallèle audit rayon ou à un plan parallèle audit rayon.

10. Combinaison telle que revendiquée dans l'une des revendications de brevet précédentes, **caractérisée en ce que** chaque première, deuxième et troisième piste ou crête de la coupe transversale de l'évidement a la forme d'un triangle ou d'un quadrangle.
